## Europäisches Patentamt
## European Patent Office
## Office européen des brevets

(19)

(11) Numéro de publication: **0 033 251**
**B1**

(12) ## FASCICULE DE BREVET EUROPEEN

(45) Date de publication du fascicule du brevet: **11.07.84**

(51) Int. Cl.³: **F 16 J 1/12**

(21) Numéro de dépôt: **81400006.3**

(22) Date de dépôt: **06.01.81**

(54) **Ensemble tige-piston destiné à coulisser dans un cylindre.**

(30) Priorité: **25.01.80 FR 8001590**

(43) Date de publication de la demande:
**05.08.81 Bulletin 81/31**

(45) Mention de la délivrance du brevet:
**11.07.84 Bulletin 84/28**

(84) Etats contractants désignés:
**DE GB IT**

(56) Documents cités:
**CH - A - 499 036**
**GB - A - 917 143**
**US - A - 3 175 474**
**US - A - 3 868 192**

(73) Titulaire: **S.A.M.M.- Société d'Applications des Machines Motrices**
**224, Quai de Stalingrad**
**F-92130 Issy-les-Moulineaux (FR)**

(72) Inventeur: **Devaud, Gerard Lucien**
**52 Rue Labrouste**
**F-75015 Paris (FR)**

(74) Mandataire: **Bressand, Georges et al,**
**c/o CABINET LAVOIX 2 Place d'Estienne d'Orves**
**F-75441 Paris Cedex 09 (FR)**

Courier Press, Leamington Spa, England.

## Description

La présente invention est relative à un ensemble tige-piston destiné à coulisser dans un cylindre, du type comprenant un piston rapporté qui comporte deux pièces annulaires alésées au diamètre extérieur de la tige, et un jonc rigide fendu partiellement logé dans une gorge circulaire de la tige et interposé entre les deux pièces annulaires.

Dans des ensembles tige-piston connus de ce type (voir par exemple le brevet GB 917 413), les deux pièces annulaires du piston sont simplement en butée contre le jonc, qui transmet à la tige les forces axiales exercées sur le piston dans les deux sens. Cet agencement ne convient pas pour les applications dans lesquelles une grande précision et une grande fiabilité, voire une sécurité totale, sont recherchées, notamment dans la construction de vérins de commande de vol pour les aéronefs.

Le brevet US—A—3 868 192 décrit un ensemble tigepiston pourvu d'un jonc, dans lequel une languette du piston est rabattue radialement sous l'effet d'un coin lors du montage. Cependant, si la partie du jonc extérieur à la gorge qui la reçoit subit ainsi lors du montage une précontrainte axiale, celle-ci ne se maintient pas après le montage, en raison du jeu indispensable pour pouvoir rabattre la languette dans la gorge de la tige. De plus et en tout état de cause, l'effort axial développé sur le jonc au montage ne s'exerce que sur la partie de celui-ci extérieure à la gorge, de sorte que ce dispositif ne permet pas de précontraindre le jonc dans sa gorge, et que de ce fait le piston ne peut être rigoureusement immobilisé dans les deux sens.

L'invention a pour but de fournir un ensemble tigepiston comblant cette lacune de façon économique.

A cet effet, l'invention a pour objet un ensemble tige-piston du type précité, caractérisé en ce que le jonc est précontraint dans la gorge par l'assemblage des deux pièces annulaires.

Une manière particulièrement simple et économique d'obtenir la précontrainte du jonc consiste à assembler les deux pièces l'une à l'autre par sertissage mutuel.

Si de plus la pièce annulaire assurant le sertissage présente, du côté opposé à l'autre pièce, un appendice axial secondaire rabattu vers l'axe de la tige pour réaliser un sertissage secondaire dans une deuxième gorge de la tige, l'ensemble tige-piston est "fail-safe" vis-à-vis d'efforts exercés sur le piston dans les deux sens, c'est-à-dire présente une sécurité totale.

La tige peut avantageusement être tubulaire, dans un souci de légèreté et d'économie.

D'autres caractéristiques et avantages de l'invention ressortiront de la description qui va suivre, donnée à titre d'exemple non limitatif et en regard du dessin annexé, sur lequel:

la Fig. 1 est une demi-vue éclatée, en coupe longitudinale, d'un ensemble tige-piston conforme à l'invention, avant assemblage;

la Fig. 2 représente, également en coupe longitudinale, l'ensemble après assemblage.

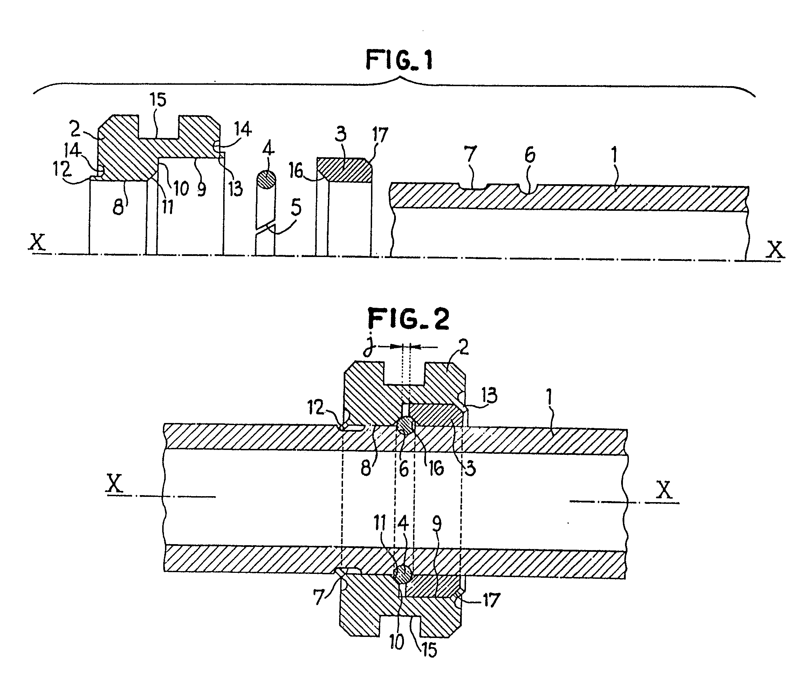

L'ensemble tige-piston représenté aux Fig. 1 et 2 est constitué de quatre pièces métalliques, à savoir une tige tubulaire 1, un corps de piston 2, une pièce de serrage 3 complétant le piston, et un jonc fendu 4 à section circulaire. A part le fente 5 de ce dernier, toutes ces pièces sont de révolution autour d'un axe commun X—X, que l'on supposera horizontal pour les besoins de la description.

La tige 1 est un tronçon de tube dans la surface extérieure duquel sont prévues deux gorges: une gorge 6 à section semi-circulaire de même rayon que celle du jonc 4 et, à une certaine distance de celle-ci, une gorge 7 à section rectangulaire. Le fond de la gorge 7 se raccorde à ses parois latérales par des arrondis.

Le corps de piston 2 a une section grossièrement rectangulaire définissant intérieurement un alésage principal 8 sur la moitié de sa longueur et un contrealésage 9 de plus grand diamètre sur le reste de sa longueur. Un épaulement radial 10 défini entre les alésages 8 et 9 se raccorde au premier d'entre eux par une surface tronconique 11 inclinée à environ 45°. Chaque alésage 8, 9 est prolongé au-delà des surfaces d'extrémité radiales du corps 2 par la face intérieure d'une jupe mince annulaire, 12 et 13 respectivement, en légère saillie axiale par rapport au corps 2. La surface extérieure de chaque jupe 12, 13 se raccorde à la face radiale correspondante du corps 2 par l'intermédiaire d'une rainure circulaire 14 ménagée dans cette face radiale.

La surface extérieure du corps de piston 2 est creusée à mi-longueur d'une gorge 15 à section rectangulaire destinée à recevoir une garniture d'étanchéité (non représentée).

La pièce de serrage 3 a une section rectangulaire dont le coin intérieur tourné vers le corps 2 est chanfreiné à 45°, ainsi que le coin extérieur opposé, pour former des surfaces tronconiques respectives 16 et 17. Le diamètre extérieur de cette pièce 3 est égal au diamètre du contrealésage 9 du corps 2, et son diamètre intérieur est égal au diamètre de l'alésage 8 ainsi qu'au diamètre extérieur de la tige 1.

Pour l'assemblage, les pièces 2 à 4 sont enfilées sur la tige 1 de façon que le jonc 4 s'encliquette dans la gorge 6 et soit situé entre les pièces 2 et 3. Ces deux pièces sont ensuite rapprochées, la pièce 3 pénétrant sans jeu dans la contre-alésage 9, jusqu'à ce que les deux surfaces tronconiques opposées 11 et 16 s'appliquent sur la partie du jonc 4 extérieure à la gorge 6.

On réalise alors un sertissage principal en rabattant la jupe 13 vers l'axe X—X sur la surface 17. Ce sertissage met le jonc 4 en précontrainte dans sa gorge et supprime toute possibilité de jeu entre les diverses pièces de l'ensemble; de plus, il assure l'étanchéité entre les pièces 2 et 3. Pour garantir l'efficacité de ce sertissage, un jeu axial *j* subsiste entre l'épaulement 10 du corps 2 et la face radiale adjacente de la pièce 3.

Enfin, on réalise un sertissage secondaire en rabattant la jupe 14 vers l'axe X—X pour la faire pénétrer dans la gorge 7. Le dimensionnement est tel que l'extrémité de cette jupe se trouve alors à proximité immédiate du coin arrondi de la gorge 7 le plus éloigné de la gorge 6. Ce sertissage secondaire assure à la fois l'étanchéité entre le corps de piston 2 et la tige 1 et la sécurité totale de l'ensemble, comme on va l'expliquer ci-dessous.

En service, l'ensemble tige-piston équipé de sa garniture d'étanchéité coulisse sans jeu dans un cylindre qui appartient par exemple à un vérin de commande de vol d'un hélicoptère.

Lorsqu'un effort parallèle à l'axe X—X s'exerce sur le piston 2—3 vers la pièce 3, c'est-à-dire vers la droite en considérant la Fig. 2, cet effort est transmis à la tige 1 par la surface conique 11 à travers le jonc 4, Celui-ci travaille au cisaillement, et il est facile de dimensionner les diverses pièces de façon à obtenir une fiabilité totale.

Pour un effort s'exerçant en sens inverse (vers la gauche de la Fig. 2), l'effort est transmis à la tige 1 par la jupe 13, la pièce 3 et le jonc 4. La résistance mécanique repose sur la jupe 13, qui travaille en flexion. Le dimensionnement est tel que cette jupe est capable de supporter les efforts maximaux attendus, compte tenu du coefficient de sécurité.

Cependant, si, pour une raison extrêmement improbable, la jupe 13 cède tout de même, la jupe secondaire 12 vient s'arcbouter dans l'arrondi adjacent de la gorge 7 et transmet directement l'effort du corps 2 à la tige 1 en travaillant au cisaillement. Le dimensionnement de cette jupe 12 lui permet de supporter les efforts limites prévisibles.

Ainsi, l'ensemble tige-piston est "fail-safe" pour les deux sens d'efforts appliqués sur le piston, ce qui le rend apte à être utilisé dans les organes de commande vitaux des aéronefs.

En variante, le jonc 4 peut être constitué par la réunion de deux demi-joncs.

## Revendications

1. Ensemble tige-piston destiné à coulisser dans un cylindre, du type comprenant un piston rapporté qui comporte deux pièces annulaires (2, 3) alésées au diamètre extérieure de la tige (1), et un jonc rigide fendu (4) partiellement logé dans une gorge circulaire (6) de la tige et interposé entre les deux pièces annulaires, caractérisé en ce que le jonc (4) est précontraint dans la gorge (6) par d'assemblage des deux pièces annulaires (2, 3).

2. Ensemble tige-piston suivant la revendication 1, caractérisé en ce que la section du jonc (4) est circulaire et en ce que chaque pièce annulaire (2, 3) présente, dans sa partie tournée vers l'autre pièce annulaire et adjacente à la tige (1), une surface tronconique (11, 16) tournée vers l'axe de la tige.

3. Ensemble tige-piston suivant l'une des revendications 1 et 2, caractérisé en ce que l'une (2) des pièces annulaires (2, 3) constitue le corps du piston et présente un contre-alésage (9) dans lequel s'ajuste librement la deuxième pièce annulaire (3).

4. Ensemble tige-piston suivant l'une quelconque des revendications 1 à 3, caractérisé en ce que les pièces annulaires (2, 3) sont assemblées l'une à l'autre par sertissage mutuel.

5. Ensemble tige-piston suivant les revendications 3 et 4 prises ensemble, caractérisé en ce que la première pièce annulaire (2) présente sur la périphérie de l'entrée du contre-alésage (9) un appendice axial (13) rabattu vers l'axe (X—X) de la tige (1) de façon à sertir la deuxième pièce annulaire (3).

6. Ensemble tige-piston suivant l'une des revendications 4 et 5, caractérisé en ce que la pièce annulaire (2) assurant le sertissage présente, du côté opposé à l'autre pièce (3), un appendice axial secondaire (12) rabattu vers l'axe (X—X) de la tige (1) pour réaliser un sertissage secondaire dans une deuxième gorge (7) de la tige.

7. Ensemble tige-piston suivant la revendication 6, caractérisé en ce que la deuxième gorge (7) a une section à peu près rectangulaire.

8. Ensemble tige-piston suivant l'une quelconque des revendications 5 à 7, caractérisé en ce que chaque appendice (12, 13) est une jupe annulaire.

9. Ensemble tige-piston suivant l'une quelconque des revendications 1 à 8, caractérisé en ce que la tige (1) est tubulaire.

## Patentansprüche

1. Kolbenstangen-Anordnung zum Gleiten in einem Zylinder, mit einem zusammengesetzten Kolben, welcher aus zwei ringförmigen Stücken (2, 3) besteht, die über Bohrungen bzw. Ausnehmungen mit dem Außendurchmesser der Stange (1) verbunden sind, und mit einem einen Spalt aufweisenden starren Ring (4), welche zum Teil in einer kreisförmigen Ausnehmung (6) in der Stange sowie zwischen den beiden ringförmigen Stücken angeordnet ist, dadurch gekennzeichnet, daß der Ring (4) durch den Zusammenbau der beiden ringförmigen Stücke (2, 3) in der Ausnehmung (6) vorgespannt ist.

2. Anordnung nach Anspruch 1, dadurch gekennzeichnet, daß der Querschnitt des Ringes (4) kreisförmig ist und daß jedes der ringförmigen Stücke (2, 3) an seiner dem anderen ringförmigen Stück zugekehrten und an der Stange angrenzenden Seite eine gegen die Stangenachse gerichtete kegelige Oberfläche (11, 16) aufweist.

3. Anordnung nach einem der Ansprüche 1 und 2, dadurch gekennzeichnet, daß das eine (2) der ringförmigen Stücke (2, 3) den Kolbenkörper bildet und eine Gegenbohrung (9) für die ungehinderte Aufnahme des zweiten ringförmigen Stückes (3) aufweist.

4. Anordnung nach einem der Ansprüche 1 bis 3, dadurch gekennzeichnet, daß die ringförmigen Stücke (2, 3) zur gegenseitigen Verbindung ineinandergreifen.

5. Anordnung nach den Ansprüchen 3 und 4, dadurch gekennzeichnet, daß das erste ringförmige Stück (2) an seinem den Eingang der Gegenbohrung (9) umgebenden Umfang einen axialen Fortsatz (13) aufweist, welcher gegen die Achse (X—X) der Stange (1) gerichtet ist, um in das zweite ringförmige Stück (3) einzugreifen.

6. Anordnung nach einem der Ansprüche 4 und 5, dadurch gekennzeichnet, daß das das Eingreifen bzw. Verbinden gewährleistende Stück (2) an der dem anderen Stück (3) gegenüberliegenden Seite einen zweiten axialen Fortsatz (12) aufweist, welcher gegen die Achse (X—X) der Stange (1) gerichtet ist, um ein weiteres Eingreifen in eine zweite Ausnehmung (7) in der Stange zu ermöglichen.

7. Anordnung nach Anspruch 6, dadurch gekennzeichnet, daß die zweite Ausnehmung (7) einen im wesentlichen rechteckigen Querschnitt aufweist.

8. Anordnung nach einem der Ansprüche 5 bis 7, dadurch gekennzeichnet, daß jeder Fortsatz (12, 13) ringförmig ausgewölbt ausgebildet ist.

9. Anordnung nach den Ansprüchen 1 bis 8, dadurch gekennzeichnet, daß die Stange (1) hohlzylindrisch ist.

## Claims

1. A piston and rod assembly for sliding in a cylinder, said assembly being of the type comprising a mounted piston which comprises two annular members (2, 3) which have bores whose diameters correspond to the outside diameter of the rod (1), and a split rigid ring (4) partly engaged in an annular groove (6) in the rod and interposed between the two annular members, characterised in that the ring (4) is pre-stressed in the groove (6) by the assembly of the two annular members (2, 3).

2. A piston and rod assembly according to claim 1, characterised in that the section of the ring (4) is circular and each annular member (2, 3) has, in the part thereof facing the other annular member and adjacent the rod (1), a frustoconical surface (11, 16) which faces the axis of the rod.

3. A piston and rod assembly according to claim 1 or 2, characterised in that one (2) of the annular members (2, 3) constitutes the body of the piston and has a counterbore (9) in which the second annular member (3) is freely fitted.

4. A piston and rod assembly according to claim 1, 2 or 3, characterised in that the annular members (2, 3) are assembled with each other by a mutual forming over thereof.

5. A piston and rod assembly according to claims 3 and 4 taken together, characterised in that the first annular member (2) has, on the periphery of the entrance of the counterbore (9), an axial extension (13) which is formed over toward the axis (X—X) of the rod (1) so as to set the second annular member (3).

6. A piston and rod assembly according to claim 4 or 5, characterised in that the first annular member (2) ensuring the setting has, on the side thereof opposed to the other annular member (3), a secondary axial extension (12) which is also formed over toward the axis (X—X) of the rod (1) so as to achieve a second setting in a second groove (7) of the rod.

7. A piston and rod assembly according to claim 6, characterised in that the second groove (7) has a substantially rectangular section.

8. A piston and rod assembly according to any one of the claims 5 to 7, characterised in that each extension (12, 13) is in the form of an annular skirt portion.

9. A piston and rod assembly according to any one of the claims 1 to 8, characterised in that the rod (1) is tubular.

FIG.1

FIG.2

0 033 251